# EUROPÄISCHE PATENTSCHRIFT

(11) **EP 3 718 460 B1**
(45) Veröffentlichungstag und Bekanntmachung des Hinweises auf die Patenterteilung: **11.01.2023**
(21) Anmeldenummer: 20167675.6
(22) Anmeldetag: 02.04.2020
(51) Int. Cl.: A47L 15/42, A47L 15/48

(54) **GESCHIRRSPÜLMASCHINE, INSBESONDERE HAUSHALTSGESCHIRRSPÜLMASCHINE**
DISHWASHER, IN PARTICULAR A DOMESTIC DISHWASHING MACHINE
LAVE-VAISSELLE, EN PARTICULIER LAVE-VAISSELLE ÉLECTROMÉNAGER

(30) Priorität: 05.04.2019 DE 102019108965; 17.02.2020 DE 102020104060
(43) Veröffentlichungstag der Anmeldung: 07.10.2020
(73) Patentinhaber: Miele & Cie. KG, 33332 Gütersloh (DE)
(72) Erfinder: Bertram, Andre, 33609 Bielefeld (DE); Kornfeld, André, 33378 Rheda-Wiedenbrück (DE); Chluba, Nils, 31688 Nienstädt (DE); Wolf, Cornelius, 33739 Bielefeld (DE); Dahms, Tobias, 30519 Hannover (DE); Stanke, Benjamin, 33604 Bielefeld (DE); Nierling, Andreas, 49326 Melle (DE); Dettmer, Martin, 33607 Bielefeld (DE); Schröder, Nils, 33611 Bielefeld (DE); Steinmeier, Ralph, 32052 Herford (DE)

(56) Entgegenhaltungen:
- EP-A1- 2 471 434
- EP-A1- 3 141 176
- EP-A1- 3 372 139
- EP-A1- 3 375 345
- EP-B1- 2 682 037
- WO-A1-2018/215331
- DE-A1-102017 120 163

## Beschreibung

Die Erfindung betrifft eine Geschirrspülmaschine, insbesondere in der Ausgestaltung einer Haushaltsgeschirrspülmaschine, mit einem einen Spülraum bereitstellenden Spülbehälter, der der Aufnahme von zu reinigendem Spülgut dient, und einer Wärmepumpeneinrichtung, die einen Verdampfer aufweist, der innerhalb eines mit Wasser befüllten Tanks angeordnet ist. Des Weiteren betrifft die Erfindung ein Verfahren zum Betrieb einer Geschirrspülmaschine.

Eine derartige Geschirrspülmaschine ist aus der EP 3 375 345 A1 bekannt.

Die aus der EP 3 375 345 A1 vorbekannte Geschirrspülmaschine verfügt über eine Wasser-Wasser-Wärmepumpeneinrichtung mit einem Verdampfer, der innerhalb eines mit als Arbeitsmedium dienendem Wasser befüllten Tanks angeordnet ist. Der Tank ist an einen Luftführungskanal und an einen Luftabführungskanal strömungstechnisch angeschlossen, welche Kanäle anderendseitig in den Spülraum einmünden. Im Betriebsfall kann so über den Luftzuführungskanal Luft aus dem Spülraum heraus in den Tank gefördert werden. Dort gelangt die Luft in unmittelbaren Kontakt mit dem Tankinhalt, das heißt mit dem im Tank bevorrateten Wasser. Der Luftabführungskanal dient dazu, aus dem Tank stammende Luft zurück in den Spülraum zu fördern. Im Ergebnis ist so ein Umluftkreislauf geschaffen, der im Betriebsfall eine Luftumwälzung gestattet, und zwar aus dem Spülraum heraus, durch den Luftzuführungskanal in den Tank hinein und von dort aus durch den Luftabführungskanal zurück in den Spülraum.

In vorteilhafter Weise ermöglichen diese nach der EP 3 375 345 A1 vorgesehenen Luftführungskanäle eine Wärmeenergieübertragung von der im Spülbehälter befindlichen Luft auf das im Tank der Wärmepumpeneinrichtung befindliche Wasser. Im Betriebsfall kann damit Wärmeenergie aus der vom Spülbehälter beherbergten Luft auf das im Tank befindliche Wasser übertragen werden, was nach einem bestimmungsgemäßen Verwendungseinsatz der Wärmepumpeneinrichtung einer beschleunigten Regeneration des als Arbeitsmedium dienenden Wassers dient.

Obgleich sich die aus der EP 3 375 345 A1 vorbekannte Konstruktion im alltäglichen Praxiseinsatz bewährt hat, besteht Verbesserungsbedarf. Denn für einen Wärmeaustausch zwischen Luft und Wasser dient allein die von dem in dem Tank bevorrateten Wasser bereitgestellte Wasseroberfläche.

Die EP 2 471 434 A1 und die DE 10 2017 120 163 A1 offenbaren jeweils ebenfalls eine Geschirrspülmaschine mit einem Spülbehälter, der der Aufnahme von zu reinigendem Spülgut dient, und einer Wärmepumpeneinrichtung, die einen Verdampfer aufweist, der innerhalb eines mit Wasser befüllten Tanks angeordnet ist.

Dieser Tank ist bei Geschirrspülmaschine gemäß der EP 2 471 434 A1 innerhalb des Spülbehälters angeordnet, wobei er vom Spülraum durch eine Trennwand abgetrennt ist. Den Tank umgibt dabei ein Spaltraum, welcher über einen Lufteinlass und einen auch als Kondenswasserauslass fungierenden Luftauslass mit dem Spülraum verbunden ist.

Es ist ausgehend vom vorbeschriebenen Stand der Technik die **Aufgabe** der Erfindung, eine noch weiter verbesserte Regeneration zu ermöglichen.

Zur **Lösung** dieser Aufgabe wird mit der Erfindung eine Geschirrspülmaschine mit den Merkmalen von Anspruch 1 vorgeschlagen.

Erfindungsgemäß ist der Tank eingehaust, das heißt innerhalb eines Gehäuses angeordnet. Dabei ist der vom Gehäuse bereitgestellte Volumenraum größer als der Tank ausgebildet, so dass das Gehäuse den Tank unter Belassung eines Spaltraums umgibt. Der Spaltraum dient als Luftdurchströmungsraum, so dass eine Umspülung aller Tankseiten mit Luft stattfinden kann.

Erfindungsgemäß ist des Weiteren vorgesehen, dass der Spaltraum an einen Luftzuführungskanal einerseits und einen Luftabführungskanal andererseits strömungstechnisch angeschlossen ist. Beide Kanäle enden jeweils anderendseitig im Spülraum, münden in diesen also ein. Im Betriebsfall kann so über den Luftzuführungskanal Luft aus dem Spülraum heraus in den den Tank umgebenden Spaltraum gefördert werden. Die in den Spaltraum geförderte Luft umspült den Tank außenseitig, so dass die Außenoberflächen aller Tankseiten mit der in den Spaltraum eingeförderten Luft in Kontakt kommen. Der Luftabführungskanal dient dazu, in den Spaltraum eingeförderte Luft zurück in den Spülraum zu fördern. Im Ergebnis kann so ein Umluftkreislauf geschaffen werden, der im Betriebsfall eine Luftumwälzung gestattet, und zwar aus dem Spülraum heraus, durch den Luftzuführungskanal in den den Tank umgebenden Spaltraum hinein und von dort aus zurück durch den Luftabführungskanal in den Spülraum.

Im Unterschied zum Stand der Technik wird mithin nicht die aus dem Spülraum stammende Luft in unmittelbaren Kontakt mit dem vom Tank bevorrateten Wasser gebracht. Es findet vielmehr eine Umspülung des Tanks statt. Im Ergebnis ist so eine zum Stand der Technik vergrößerte Wärmetauscherfläche gegeben, was die Regeneration effizienter macht. An den Außenoberflächen des Tanks kann es im Betriebsfall zu einer Betauung kommen, das heißt zu einer Kondensatbildung aus der den Tank umspülenden Spülraumluft. Dieses Kondensat sammelt sich im Spaltraum an. Für eine Kondensatabführung ist erfindungsgemäß eine Wasserleitung vorgesehen, die an den Spaltraum strömungstechnisch angeschlossen ist und in den Spülraum einmündet. Im Betriebsfall entstehendes Kondensat kann so aus dem Spaltraum heraus in den Spülraum überführt werden, von wo aus dann eine Verwerfung durch Abpumpen stattfinden kann.

Die erfindungsgemäße Ausgestaltung erbringt insgesamt den Vorteil einer weiter verbesserten, insbesondere effizienteren Regeneration. Denn die aus dem Spülraum stammende Warmluft wird im Unterschied zum Stand der Technik über eine größere Wärmetauscherfläche geführt, womit ein gesteigerter Wärmeeintrag in das vom Tank beherbergte und zu regenerierende Wasser gegeben ist.

Die Einhausung des Tanks hat zudem den Vorteil, dass durch den Spaltraum zwischen Tank und umgebendem Gehäuse eine als Dämmung für den Tank wirkende Lufthülle gegeben ist, die eine ungewollte Betauung außenseitig des Gehäuses vermeidet. Etwaiges im Betriebsfall entstehendes Kondensat bildet sich allein auf der Außenoberfläche des Tanks und sammelt sich im Spaltraum zwischen Tank und Gehäuse an. Dabei ist eine Kondensatabfuhr über die an den Spaltraum strömungstechnisch angeschlossene Wasserleitung möglich. Da sich die um den Tank ausbildende Lufthülle eine dämmende Wirkung auf den Tank hat, erübrigt sich das zusätzliche Aufbringen einer Dämmung auf der Tankaußenoberfläche.

Im bestimmungsgemäßen Betriebsfall sollte die Temperatur der zirkulierenden Luft nicht, zumindest nicht deutlich unterhalb des Taupunkts der Umgebungsluft absinken, das heißt vorzugsweise nicht unter 5° C absinken. Denn ansonsten besteht die Gefahr einer unkontrollierten Betauung an luftführenden Bauteilen der Geschirrspülmaschine.

Für den Fall, dass die zirkulierende Luft nicht genügend Wärmeenergie im geschlossenen Spülraum aufnehmen kann, ist es bevorzugt, die den Spülraum verschließende Spülraumtür zu öffnen, um eine Luftvermischung mit der Umgebungsluft zu bewirken. Dabei wird bevorzugter Weise die Lufttemperatur über einen Temperatursensor im Ausströmkanal des Luftabführungskanals gemessen.

Im bestimmungsgemäßen Anwendungsfall findet eine Aufheizung der Spülflotte in an sich bekannter Weise unter Mitwirkung der Wärmepumpeneinrichtung statt. Dabei kühlt das im Tank der Wärmepumpeneinrichtung befindliche Wasser ab, friert ggfls. sogar ein. Vorzugsweise liegt dabei ein sich nach dem Klarspülschritt einstellender Vereisungsgrad von 60 bis 90%, vorzugsweise von 80 bis 90% vor. Für einen erneuten Einsatz der Wärmepumpeneinrichtung ist das Wasser auf eine Mindesttemperatur aufzuwärmen, das heißt ggfls. sogar aufzutauen. Dies geschieht erfindungsgemäß mit Hilfe einer Trocknungsluftumwälzung, die es ermöglicht, in der Trocknungsluft befindliche Wärmeenergie auf das im Tank bevorratete Wasser bzw. auf das sich dort befindliche Eis zu übertragen. Die Übertragung der in der Trocknungsluft befindlichen Wärmeenergie auf das im Tank bevorratete Wasser bzw. Eis erfolgt dabei indirekt, indem die Trocknungsluft in das den Tank beherbergende Gehäuse eingeleitet wird, infolgedessen es zu einer Luftumspülung des Tanks kommt. Im Ergebnis dieser Luftumspülung kommt es zu einer Erwärmung der Tankwände, was wiederum zu einem Wärmeeintrag in das vom Tank bevorratete Wasser bzw. Eis führt.

Ein Spülprogramm sieht typischerweise mehrere aufeinander nachfolgende Spülschritte vor. Der letzte Spülschritt ist in der Regel die Spülguttrocknung. Diesem Spülschritt geht zumeist das sog. Klarspülen voran. Ein Klarspülen erfolgt mit aufgeheizter Spülflotte, infolgedessen es zu einem Aufheizen des Spülguts kommt. Im nachfolgenden Trocknungsschritt erfolgt typischerweise eine Trocknung durch Kondensationstrocknung, die dadurch bewerkstelligt wird, dass der Spülbehälter von außen mit Luft abgekühlt wird, infolgedessen es innenseitig des Spülbehälters zur Kondensation des im Spülbehälter befindlichen Wasserdampfs kommt, der dadurch entsteht, dass Restfeuchte aufgrund des im vorangegangenen Klarspülschritt erwärmten Spülguts verdunstet.

Die erfindungsgemäße Konstruktion ermöglicht es nun, die im Trocknungsschritt im Spülraum entstehende Feuchte und warme Trocknungsluft abzusaugen und sie zur Tankumspülung in das den Tank beherbergende Gehäuse einzuführen. Im Gehäuse kommt es dann zu einer Erwärmung des Tanks bei gleichzeitiger Abkühlung der Trocknungsluft mit der Folge, dass sich das im Tank befindliche Wasser erwärmt. Infolge der Temperaturabsenkung der Trocknungsluft kommt es zudem zu Kondensationseffekten, das heißt die in der Trocknungsluft befindliche Feuchtigkeit fällt in Form von Wasser aus, welches sich dann außerhalb des Tanks im Gehäuse ansammelt. Die insofern abgekühlte und entfeuchtete Trocknungsluft wird in den Spülraum zurückgeführt, wofür der Luftabführungskanal dient.

Im Umwälzbetrieb wird die Trocknungsluft weiter umgeführt, zumindest solange, bis die Trocknungsluft soweit abgekühlt ist, dass kein weiterer zumindest nennenswerter Wärmeübertrag von der Trocknungsluft auf den Tank bzw. auf das im Tank befindliche Wasser stattfindet.

Gemäß einem weiteren Merkmal der Erfindung ist eine Ventilatoreinheit vorgesehen, die in den Luftzuführungskanal und/oder den Luftabführungskanal integriert ist. Dabei dient die Ventilatoreinheit dazu, im Betriebsfall in schon vorbeschriebener Weise Trocknungsluft aus dem Spülbehälter in das Gehäuse und wieder zurück in den Spülbehälter zu fördern. Es kann zu diesem Zweck eine in den Luftzuführungskanal integrierte Ventilatoreinheit vorgesehen sein, die Trocknungsluft aus dem Spülbehälter ansaugt und diese alsdann in das Gehäuse drückt. Wahlweise bzw. je nach Einbauort und/oder vorhandenem Bauraum kann eine Ventilatoreinheit mit einem Radial- oder Axialgebläse genutzt werden.

Es ist indes bevorzugt, die Ventilatoreinheit nicht in den Luftzuführungskanal, sondern in Luftabführungskanal zu integrieren. Denn die Luft wird von der Ventilatoreinheit diffus angesaugt und es bildet sich in Strömungsrichtung hinter der Ventilatoreinheit ein gerichteter Luftstrahl aus. Die Anordnung der Ventilatoreinheit im Luftabführungskanal bewirkt mithin den Vorteil einer gleichmäßigeren Umströmung aller Tankflächen, was den Wärmeübergang verbessert.

Der von der Ventilatoreinheit erzeugte Volumenstrom sollte zwischen 5 m³ pro Stunde und 25 m³ pro Stunde, vorzugsweise zwischen 10 m³ pro Stunde und 20 m³ pro Stunde betragen.

Gemäß einem weiteren Merkmal der Erfindung ist vorgesehen, dass der Tank ein Bodenteil, ein Deckenteil und das Bodenteil mit dem Deckenteil verbindende Seitenteile aufweist, wobei das Bodenteil auf seiner Außenoberfläche mit einer Dämmung ausgerüstet ist.

Gemäß dieser Alternative erfolgt im Anwendungsfall keine Luftumströmung der Außenoberfläche des Bodenteils des Tanks. Die Luftführung umschließt nur die Seitenteile und das Deckenteil. Dabei bewirkt die Dämmung, dass eine unerwünschte Betauung des nicht umströmten Bodenteils vermieden ist.

Es ist in diesem Zusammenhang gemäß einem weiteren Merkmal der Erfindung bevorzugt, dass die Dämmung den Spaltraum zwischen Tank und Gehäuse im Bereich des Bodenteils ausfüllt. Der Spaltraum ist mithin unterhalb des Bodenteils durch die Dämmung vollständig verschlossen. Es ist damit eine zu enge Spaltbildung vermieden, die für eine Abtrocknung von sich unter Umständen bildenden Kondensat von Nachteil wäre.

Gemäß einem weiteren Merkmal der Erfindung ist vorgesehen, dass die Wasserleitung an einen Sammelbehälter strömungstechnisch angeschlossen ist. In diesen Sammelbehälter können im bestimmungsgemäßen Verwendungsfall Kondensat aus dem Gehäuse überführt und zwischengespeichert werden, bevor es insbesondere mittels einer Pumpe in den Spülbehälter überführt wird. Die Ausbildung eines solchen Sammelbehälters kann insbesondere dann notwendig werden, wenn der Spaltraum durch eine bodenteilseitige Ausgestaltung einer Dämmung verkleinert ist.

Die erfindungsgemäße Geschirrspülmaschine zeichnet sich gemäß einem weiteren Merkmal der Erfindung durch einen Luftkanal aus, der an den Luftabführungskanal strömungstechnisch angeschlossen ist und der anderendseitig in die den Spülbehälter umgebende Atmosphäre mündet.

Mittels dieses Luftkanals ist es gestattet, aus dem Gehäuse stammende Trocknungsluft nicht in den Spülraum zurück, sondern in die den Spülbehälter umgebende Atmosphäre zu führen. Dabei erfolgt ein Ableiten von aus dem Gehäuse stammender Luft insbesondere in einen Bereich oberhalb des Spülbehälters, was es gestattet, bei geöffneter Spülraumtür aus dem Spülraum austretende Wrasen zu verdünnen und von der Geschirrspülmaschine oder benachbarten Küchenmöbeln wegzuleiten.

Gemäß einem weiteren Merkmal der Erfindung ist eine mit dem Luftabführungskanal zusammenwirkende Luftleiteinrichtung vorgesehen, die ein aus einer ersten Gebrauchsstellung in eine zweite Gebrauchsstellung und umgekehrt überführbares Luftleitmittel aufweist, wobei der Luftabführungskanal in der ersten Gebrauchsstellung des Luftleitmittels in strömungstechnischer Wirkverbindung mit dem Spülraum und in der zweiten Gebrauchsstellung des Luftleitmittels in strömungstechnischer Wirkverbindung mit der den Spülraum umgebenden Atmosphäre steht.

Gemäß dieser konstruktiven Ausgestaltung kann wahlweise zwischen einer Beschickung des Spülraums und der den Spülraum umgebenden Atmosphäre mit aus dem Gehäuse stammender Luft unterschieden werden. Insbesondere ist es möglich, während eines Trocknungsschritts Trocknungsluft im Umluftbetrieb durch den Spülraum und das den Tank beherbergende Gehäuse zu führen, und zwar solange, bis es zu einer Spülraumtüröffnung kommt. Mit einer Spülraumtüröffnung wird mittels der Luftleiteinrichtung auf den Luftleitkanal umgestellt, so dass die aus dem Gehäuse stammende Luft nun nicht mehr in den Spülraum, sondern zum Wrasenschutz in die Atmosphäre oberhalb des Spülraums geleitet wird.

Dem Grunde nach sind zwei alternative Verfahrensweisen möglich.

Gemäß einer ersten Verfahrensalternative zum Betrieb einer erfindungsgemäßen Geschirrspülmaschine ist vorgesehen, dass während einer Spülguttrocknung eine den Spülraum verschließende Spülraumtür automatisch geöffnet und mit Öffnung der Spülraumtür Trocknungsluft aus dem Spülraum durch den als Luftdurchströmungsraum dienenden Spaltraum geführt wird.

Gemäß dieser Verfahrensalternative wird mit Einleitung der Spülguttrocknung die den Spülraum verschließende Spülraumtür geöffnet. Dabei dient die Spülraumtüröffnung dazu, im Spülraum befindliche Wrasen in die die Spülmaschine umgebende Atmosphäre austreten zu lassen.

Mit Öffnung der Spülraumtür wird Trocknungsluft aus dem Spülraum durch den als Luftdurchströmungsraum dienenden Spaltraum des Gehäuses geführt. Über den Luftabführungskanal findet eine Rückführung der Trocknungsluft nach einem Passieren des Gehäuses zurück in den Spülraum statt. Es findet so eine Aufheizung des vom Tank bevorrateten Wassers in schon vorbeschriebener Weise statt. Zudem wird ein Austreiben der Wrasen aus dem Spülraum begünstigt.

Gemäß einer zweiten Verfahrensalternative ist vorgesehen, dass mit Beginn einer Spülguttrocknung Trocknungsluft in einem Umluftkreislauf durch den Spülraum und den als Luftdurchströmungsraum dienenden Spaltraum geführt wird. Es findet mithin keine Spülraumtüröffnung statt und die den Tank umspülende Trocknungsluft wird ausschließlich im Umluftkreislauf geführt.

Hinsichtlich der zweiten Verfahrensalternative ist gemäß einem weiteren Merkmal der Erfindung vorgesehen, dass während der Spülguttrocknung eine den Spülraum verschließende Spülraumtür automatisch geöffnet wird und mit Öffnung der Spülraumtür die aus dem Spülraum in den als Luftdurchströmungsraum dienenden Spaltraum geführte Trocknungsluft durch den Luftführungskanal in die den Spülbehälter umgebende Atmosphäre geführt wird. Gemäß dieser Weiterbildung ist vorgesehen, dass mit Beginn einer Spülguttrocknung die Spülraumtür zunächst noch verschlossen bleibt. Erst zu einem späteren Zeitpunkt findet eine Spülraumtüröffnung statt. Zu diesem Zeitpunkt wird die Trocknungsluft dann nicht mehr zurück in der Spülraum geführt, sondern in die oberhalb des Spülbehälters befindliche Atmosphäre. Dies führt zu einer Verdünnung der mit Öffnung der Spülraumtür aus dem Spülraum aufsteigenden Wrasen, und dies unter gleichzeitiger Wegführung der Wrasen von der Geschirrspülmaschine und von zur Geschirrspülmaschine benachbarten Küchenmöbeln.

Die zweite Verfahrensalternative erbringt den Vorteil, dass einerseits vor einer Öffnung der Spülraumtür ein Absenken der Spülraumtemperatur erreicht ist und dass andererseits nach einer Öffnung der Spülraumtür eine Wrasenverdünnung und eine Wegführung der Wrasen von der Geschirrspülmaschine erreicht ist.

Vor einer Öffnung der Spülraumtür wird die warme, feuchte Spülraumluft am Verdampfer entlanggeführt und abgekühlt. Die wieder in den Spülbehälter einströmende, kalte Luft kühlt den Spülraum ab und die absolute Feuchte der Luft im Spülraum wird reduziert. Wird nun die Spülraumtür geöffnet, beinhalten die austretenden Wrasen deutlich weniger Wasser, welches sich an den umliegenden Möbeln und/oder der Geschirrspülmaschine niederschlagen kann. Wird die Temperatur des Spülraums zum Zeitpunkt der Türöffnung auf einen entsprechend niedrigen Wert abgesenkt, vorzugsweise zwischen 35° C und 45° C, vorzugsweise auf eine Temperatur zwischen 37° C und 42° C, so kann die Menge des niedergeschlagenen Wassers auf den Möbeln und/oder der Geschirrspülmaschine auf ein ausreichend geringes Niveau gebracht werden, welches eine Beschädigung dieser Möbel und/oder der Geschirrspülmaschine ausschließt und gleichzeitig eine ausreichend schnelle Trocknung durch die Türöffnung sicherstellt.

Zur Verdunstung des Wassers auf dem Spülgut ist eine bestimmte Zeitdauer notwendig. Sofern der Spülraum und das Spülgut zu schnell abkühlen, kann sich dies nachteilig auf die Trocknung auswirken. Eine zu schnelle Abkühlung kann verhindert werden, indem der Volumenstrom der Ventilatoreinheit reduziert wird.

Im Ergebnis der erfindungsgemäßen Ausgestaltung steht eine Verbesserung des Wärmestroms durch das Umströmen des Verdampfertanks, wodurch sich die Regenerationszeit verkürzt. Dabei bietet die Umluftführung den Vorteil eines geringeren Verschmutzungsrisikos als dass Ansaugen von Frischluft aus der Umgebung.

Da der Verdampfertank nicht mit Luft durchströmt, sondern umströmt wird, besteht kein direkter Kontakt zwischen Tankwasser und Luftkanal. Dies bietet den Vorteil, dass kein Kippschutz für das Tankwasser notwendig ist. Auch kann der Verdampfertank wahlweise als geschlossener oder aber auch durch z. B. Wasserleitungen zum Spülraum als offener Tank gestaltet sein. Ebenfalls vorteilhaft ist, dass anfallendes Kondensat nicht in den Tank geleitet wird und somit keine ständige Füllstandsanpassung notwendig ist.

Weitere Vorteile und Merkmale der Erfindung ergeben sich aus der nachfolgenden Beschreibung anhand der Figuren. Dabei zeigen
- Fig. 1: in schematischer Darstellung eine erfindungsgemäße Geschirrspülmaschine gemäß einer ersten Ausführungsform;
- Fig. 2: in schematischer Darstellung eine erfindungsgemäße Geschirrspülmaschine gemäß einer zweiten Ausführungsform;
- Fig. 3: in schematischer Darstellung eine erfindungsgemäße Geschirrspülmaschine gemäß einer dritten Ausführungsform;
- Fig. 4: in schematischer Darstellung eine erfindungsgemäße Geschirrspülmaschine gemäß einer vierten Ausführungsform;
- Fig. 5: in schematischer Darstellung von der Seite die erfindungsgemäße Geschirrspülmaschine nach Fig. 4 und
- Fig. 6: in schematischer Darstellung eine Geschirrspülmaschine nach dem Stand der Technik.

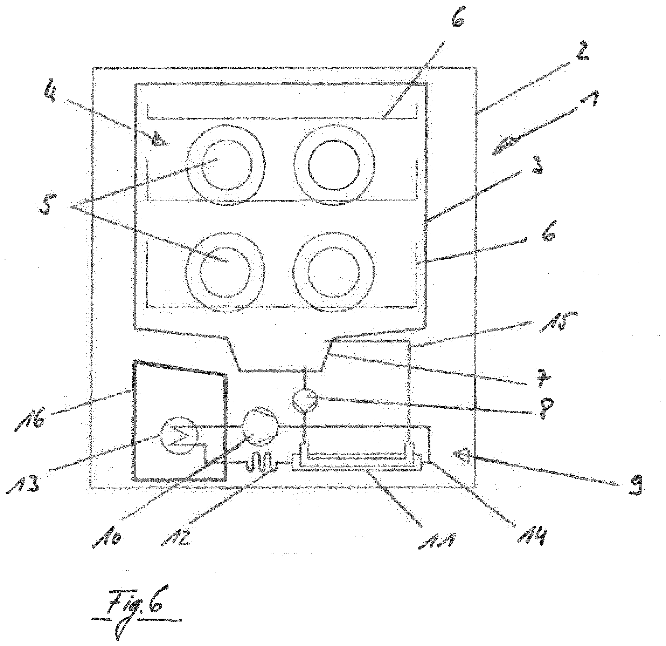

Fig. 6 lässt in rein schematischer Darstellung eine Geschirrspülmaschine 1 erkennen, wie sie aus dem Stand der Technik bekannt ist, so zum Beispiel aus der EP 3 375 345 A1.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende und in der Figur nicht näher dargestellte Versorgungsleitungen ist die in den Figuren ebenfalls nicht dargestellte Sprüheinrichtung 8 strömungstechnisch angeschlossen.

Die Geschirrspülmaschine 1 verfügt des Weiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser 17 als Wärmeträgermedium befüllt ist.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe angeschlossener Umwälzkreislauf 15 vorgesehen, der der Spülflottenumwälzung dient. Die im Betriebsfall im Verflüssiger 11 durch Verflüssigung des Arbeitsmediums freiwerdende Wärmeenergie wird mithin auf die im Umwälzkreislauf 15 umgewälzte Spülflotte übertragen, zu welchem Zweck ein entsprechend ausgebildeter Wärmetauscher vorgesehen ist.

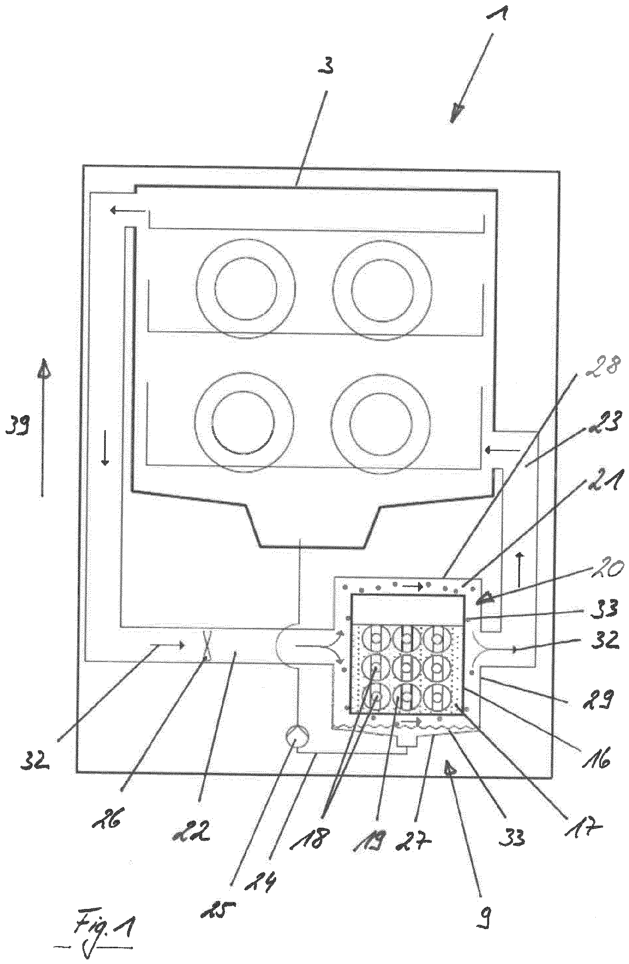

Die erfindungsgemäße Weiterbildung der vorbekannten Geschirrspülmaschine nach Fig. 6 ist in unterschiedlichen Ausführungsformen in den Figuren 1 bis 5 dargestellt.

Gemäß der erfindungsgemäßen Ausgestaltung ist der Tank 16 innerhalb eines Gehäuses 20 angeordnet. Dabei umgibt das Gehäuse 20 den Tank 16, und zwar unter Belassung eines Spaltraums 21, der als Luftdurchströmungsraum dient.

Der Spaltraum 21 ist an einen Luftzuführungskanal 22 und an einem Luftabführungskanal 23 strömungstechnisch angeschlossen. Anderendseitig, das heißt gehäuseentferntseitig münden die beiden Kanäle 22 und 23 jeweils in den Spülraum 4 ein. Es ist so ein Umluftkreislauf zwischen Spülraum 4 und Gehäuse 20 geschaffen, der es ermöglicht, Luft in einen Umwälzkreislauf zu führen und zwar aus dem Spülraum 4 durch den Luftzuführungskanal 22 hindurch in das Gehäuse 20, das heißt den dort befindlichen Spaltraum 21, und von dort aus durch den Luftabführungskanal 23 zurück in den Spülraum 4.

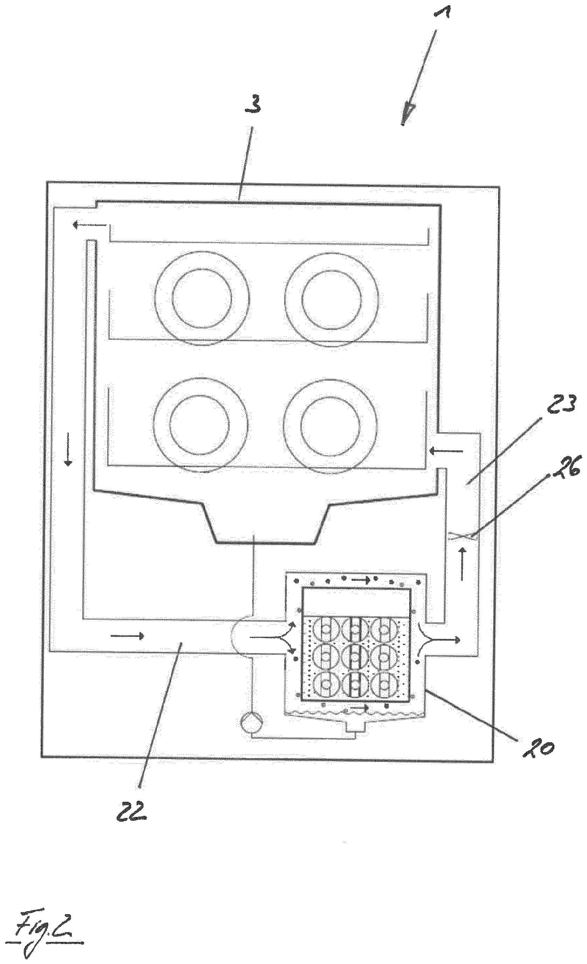

Zur Luftumwälzung dient eine Ventilatoreinheit 26, die im gezeigten Ausführungsbeispiel in den Luftzuführungskanal 22 integriert ist. Alternativ ist auch die Integration einer solchen Ventilatoreinheit 26 in den Luftabführungskanal 23 möglich, wie dies die zweite Ausführungsform nach Fig. 2 erkennen lässt. Dabei ist die Anordnung der Ventilatoreinheit 26 im Luftabführungskanal 23 bevorzugt, weil im Betriebsfall saugseitig eine diffuse Luftströmung erzielt wird, die einen verbesserten Wärmeübergang zwischen Luft und Wassertank 16 erbringt.

Die Ventilatoreinheit 26 verfügt über ein motorgetriebenes Laufrad. Im Betriebsfall verdreht das Laufrad, wodurch Luft aus dem Spülraum 4 angesogen und in den schon vorbeschriebenen Umluftkreislauf geführt wird, was durch die in den Figuren eingezeichneten Pfeile 32 symbolisiert ist.

Das Gehäuse 20 ist an eine Wasserleitung 24 strömungstechnisch angeschlossen, die in den Spülraum 4 mündet. In die Wasserleitung 24 ist eine Pumpe 25 integriert, so dass im Gehäuse 20 anfallendes Kondensat im Bedarfsfall aus dem Gehäuse 20 gepumpt und in den Spülbehälter 3 überführt werden kann.

Der Wassertank 16 verfügt über ein Bodenteil 27, ein Deckenteil 28 sowie Seitenteile 29, die das Bodenteil 27 mit dem Deckenteil 28 verbinden. Die im bestimmungsgemäßen Betriebsfall im Umluftkreislauf geführte Trocknungsluft umspült sämtliche Außenoberflächen von Bodenteil 27, Deckenteil 28 und Seitenteilen 29, womit eine maximierte Wärmeübertragungsfläche gegeben ist.

Die Wärmepumpeneinrichtung 9 dient im bestimmungsgemäßen Verwendungsfall in an sich bekannter Weise dazu, die Aufheizung der Spülflotte zu bewirken, zumindest teilweise. Infolgedessen kommt es zu einer Abkühlung des im Tank 16 befindlichen Wassers 17, bis hin zum Einfrieren desselben, so dass sich Eis im Tank 16 bildet. Die Figuren lassen in dem Zusammenhang schematisch die Verdampferrohre 18 des Verdampfers 13 und die sich im Verwendungsfall an den Verdampferrohren 18 bildende Eismäntel 19 erkennen.

Eine erneute Verwendung der Wärmepumpeneinrichtung 9 ist erst dann wieder energetisch sinnvoll möglich, wenn das im Tank 16 befindliche Eis wieder aufgetaut bzw. das Wasser 17 eine Mindesttemperatur erreicht hat. Um das Auftauen bzw. das Erreichen der Mindesttemperatur zu beschleunigen, dienen die erfindungsgemäßen Luftkanäle 22 und 23, die es ermöglichen, mit Beginn einer Spülguttrocknung Trocknungsluft in einem Umluftkreislauf durch den Spülbehälter 3 und das Gehäuse 20 zu führen.

Um sicherzustellen, dass im Betriebsfall möglichst warme Trocknungsluft aus dem Spülraum 4 angesogen wird, mündet der Luftzuführungskanal 22 in Höhenrichtung 39 der Geschirrspülmaschine 1 oberhalb der Einmündungsstelle des Luftabführungskanals 23 in den Spülraum 4 ein. Dabei ist es bevorzugt, dass der Luftzuführungskanal 22 möglichst nahe der Decke des Spülbehälters 3 in den Spülraum 4 einmündet.

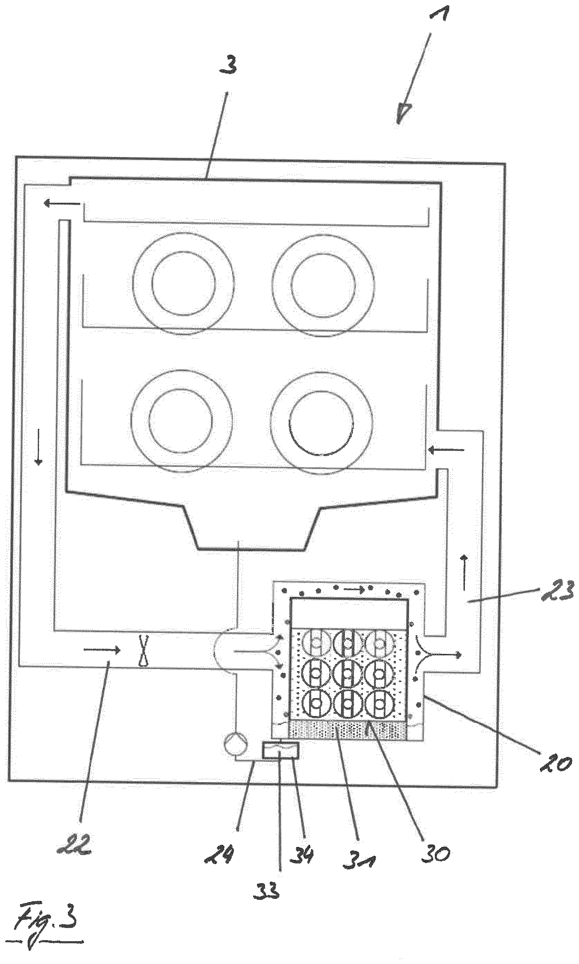

Gemäß einer dritten Ausführungsform, die in Fig. 3 dargestellt ist, ist die Außenoberfläche 30 des Bodenteils 27 mit einer Dämmung 31 ausgerüstet. Dabei fällt die Dämmung 31 den Spaltraum 21 zwischen Tank 16 und Gehäuse 20 im Bereich des Bodenteils 27 vollständig aus. Gemäß dieser Ausführungsform findet mithin im Betriebsfall nur eine Luftumspülung der Seitenteile 29 und des Deckenteils 28 statt. Die Dämmung 31 dient dazu, eine Betauung des Bodenteils 27 auf der Außenoberfläche 30 zu vermeiden.

Um trotz Ausbildung der Dämmung 31 einen zur Aufnahme von unter Umständen anfallendem Kondensat hinreichend groß genug ausgebildeten Volumenraum bereitstellen zu können, ist gemäß dieser Ausführungsform in die Wasserleitung 24 ein Sammelbehälter 34 integriert. In diesem strömt im Bedarfsfall der Gewichtskraft folgend im Gehäuse 20 entstehendes Kondensat ein. Über die Wasserleitung 24 kann dieses abgepumpt und in den Sammelbehälter 3 überführt werden.

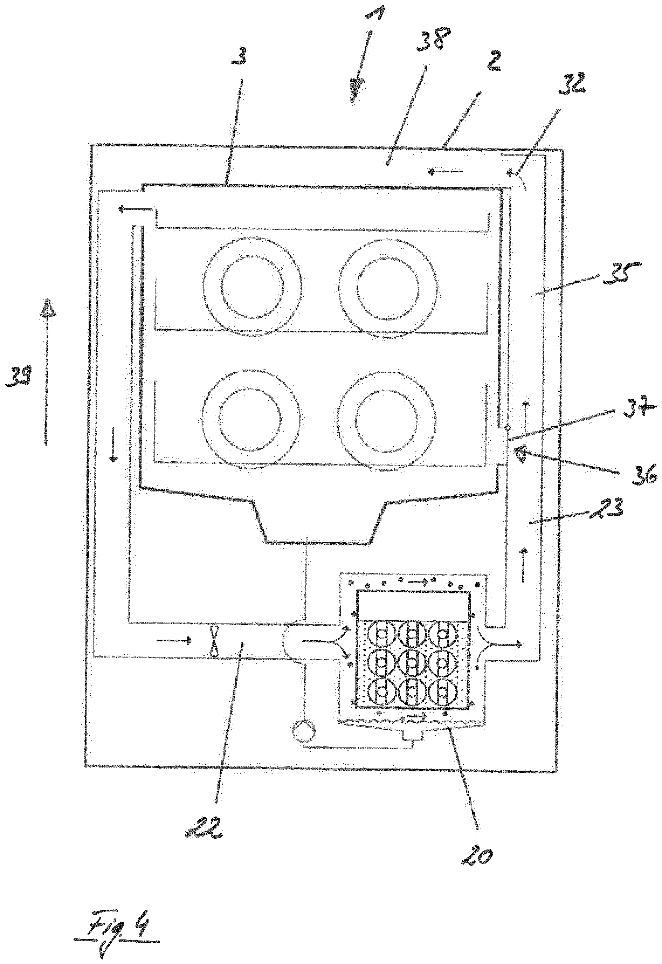

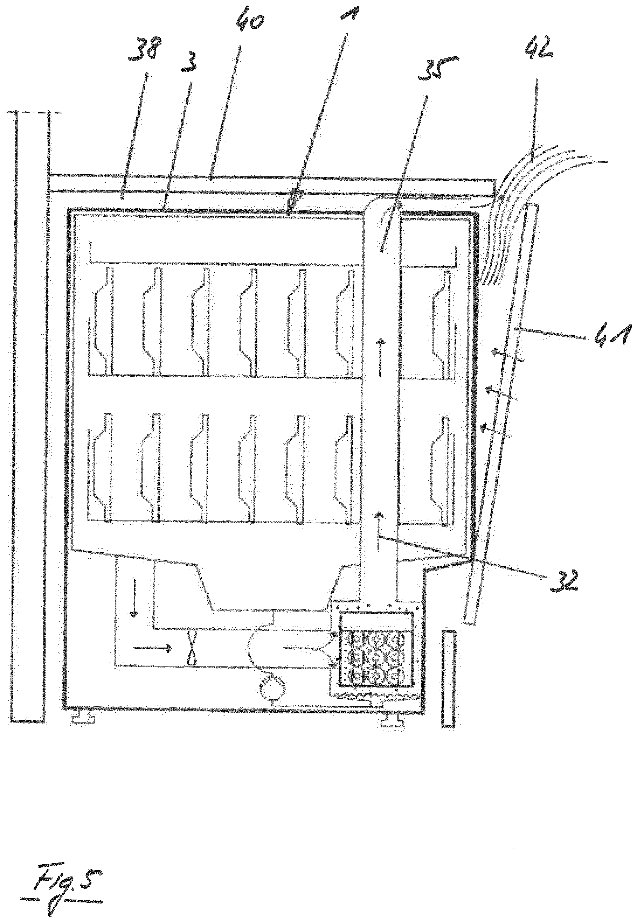

Gemäß einer besonders bevorzugten Ausführungsform, die in den Figuren 4 und 5 dargestellt ist, ist an den Luftabführungskanal 23 ein Luftleitkanal 35 strömungstechnisch angeschlossen. Es ist ferner eine Luftleiteinrichtung 36 vorgesehen, die über ein Luftleitmittel 37 verfügt, die aus einer ersten Gebrauchsstellung in eine zweite Gebrauchsstellung und umgekehrt verbracht werden kann. Im gezeigten Ausführungsbeispiel ist das Luftleitmittel 37 als verschwenkbare Verschlussklappe ausgebildet.

In der ersten Gebrauchsstellung des Luftleitmittels 37 steht der Luftabführungskanal 23 in strömungstechnischer Wirkverbindung mit dem Spülraum 4. In dieser Stellung des Luftleitmittels 37 kann aus dem Spülraum 4 stammende Trocknungsluft im Umwälzkreislauf geführt werden, wie anhand der Figuren 1 bis 3 bereits beschrieben.

In der zweiten Gebrauchsstellung des Luftleitmittels 37, wie diese in Fig. 4 dargestellt ist, steht der Luftabführungskanal 23 in strömungstechnischer Wirkverbindung mit der den Spülraum 4 umgebenden Atmosphäre 38. In dieser Stellung des Luftleitmittels 37 ist ein Abführen von Trocknungsluft aus dem Gehäuse 20 in einen Bereich oberhalb des Spülbehälters 3 gestattet, wie dies in Fig. 4 anhand der Pfeile 32 dargestellt ist.

Fig. 5 lässt eine typische Einbausituation einer erfindungsgemäßen Geschirrspülmaschine 1 erkennen. Hieraus ergibt sich, dass oberhalb der Geschirrspülmaschine 1 eine Arbeitsplatte 40 angeordnet ist, wobei zwischen Geschirrspülmaschine 1 und Arbeitsplatte 40 ein Spaltraum gegeben ist, in den die aus dem Gehäuse 20 stammende Trocknungsluft abgeführt wird. Von Vorteil dieser Ausgestaltung ist insbesondere, dass im Falle einer Öffnung der Spülraumtür 41 dem Spülraum 4 entstammende Wrasen 42 durch die oberhalb des Spülbehälters 3 austretende Trocknungsluft verdünnt werden. Zudem werden die Wrasen 42 von der Geschirrspülmaschine 1 und unter Umständen benachbarten Küchenmöbeln weggeführt, so dass sich insgesamt ein verbesserter Wrasenschutz für die Geschirrspülmaschine 1 und zur Geschirrspülmaschine 1 benachbarte Küchenmöbel ergibt.

Die Ausgestaltung nach den Figuren 4 und 5 erlaubt zudem eine Verfahrensdurchführung wie folgt. Mit Beginn einer Spülguttrocknung wird Trocknungsluft in einem Umluftkreislauf durch den Spülraum 4 und den als Luftdurchströmungsraum dienenden Spaltraum 21 geführt. Zu diesem Zweck befindet sich das Luftleitmitteil 37 in seiner ersten Stellung, sperrt den Luftleitkanal 35 gegenüber dem Luftabführungskanal 23 strömungstechnisch also ab. Infolge eines Umluftbetriebs kommt es zu einer Abkühlung der im Umwälzbetrieb geführten Trocknungsluft einerseits und einem Aufheizen des im Wassertank 16 befindlichen Wassers 17 durch Wärmeübertrag.

Die Trocknungsluftumwälzung geschieht bei noch geschlossener Spülraumtür 41.

Zu einem vorgebbaren Zeitpunkt öffnet sich während der Spülguttrocknung die den Spülraum 4 verschließende Spülraumtür 41 bevorzugter Weise automatisch. Mit der Öffnung der Spülraumtür 41 wird die aus dem Spülraum 4 in den Spaltraum 21 geführte Trocknungsluft nach Umstellung des Luftleitmittels 37 durch den Luftführungskanal 35 in die den Spülbehälter 3 umgebende Atmosphäre 38 geführt. Dies führt zur Verdünnung der mit Öffnung der Spülraumtür 41 aus dem Spülraum 4 austretenden Wrasen 42.

Diese Verfahrensdurchführung eignet sich besonders gut für Hochtemperaturprogramme.

### Bezugszeichen

- 1: Geschirrspülmaschine
- 2: Gehäuse
- 3: Spülbehälter
- 4: Spülraum
- 5: Spülgut
- 6: Spülkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf (der Wärmepumpeneinrichtung)
- 15: Umwälzkreislauf (der Spülflotte)
- 16: Tank
- 17: Wasser
- 18: Verdampferrohr
- 19: Eismantel
- 20: Gehäuse
- 21: Spaltraum#
- 22: Luftzuführungskanal
- 23: Luftabführungskanal
- 24: Wasserleitung
- 25: Pumpe
- 26: Ventilatoreinheit
- 27: Bodenteil
- 28: Deckenteil
- 29: Seitenteil
- 30: Außenoberfläche
- 31: Dämmung
- 32: Pfeil
- 33: Kondensat
- 34: Sammelbehälter
- 35: Luftleitkanal
- 36: Luftleiteinrichtung
- 37: Luftleitmittel
- 38: Atmosphäre
- 39: Höhenrichtung
- 40: Arbeitsplatte
- 41: Spülraumtür
- 42: Wrasen

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (5) dient, und einer Wärmepumpeneinrichtung (9), die einen Verdampfer (13) aufweist, der innerhalb eines mit Wasser (17) befüllten Tanks (16) angeordnet ist,
wobei der Tank (16) innerhalb eines Gehäuses (20) angeordnet ist, das den Tank (16) unter Belassung eines als Luftdurchströmungsraum dienenden Spaltraums (21) umgibt, wobei der Spaltraum (21) mit einem ersten Anschluss an einen Luftzuführungskanal (22) und mit einem zweiten Anschluss an einen Luftabführungskanal (23) strömungstechnisch angeschlossen ist, welche Kanäle (22, 23) jeweils anderendseitig in den Spülraum (4) einmünden,
**dadurch gekennzeichnet,**
**dass** der Spaltraum (21) mit einem dritten Anschluss an eine in den Spülraum (4) mündende Wasserleitung (24) strömungstechnisch angeschlossen ist,
in die eine Pumpe (25) integriert ist, so dass im Gehäuse (20) anfallendes Kondensat aus dem Gehäuse (20) gepumpt und in den Spülbehälter (3) überführt werden kann.

2. Geschirrspülmaschine nach Anspruch 1,
**dadurch gekennzeichnet,**
**dass** in den Luftzuführungskanal (22) und/oder in den Luftabführungskanal (23) eine Ventilatoreinheit (26) integriert ist.

3. Geschirrspülmaschine nach Anspruch 1 oder 2,
**dadurch gekennzeichnet,**
**dass** der Tank (16) ein Bodenteil (27), ein Deckenteil (28) und das Bodenteil (27) mit dem Deckenteil (28) verbindende Seitenteile (29) aufweist, wobei das Bodenteil (27) auf seiner Außenoberfläche (30) mit einer Dämmung (31) ausgerüstet ist.

4. Geschirrspülmaschine nach Anspruch 3,
**dadurch gekennzeichnet,**
**dass** die Dämmung (31) den Spaltraum (21) zwischen Tank (16) und Gehäuse (20) im Bereich des Bodenteils (27) ausfüllt.

5. Geschirrspülmaschine nach einem der vorhergehenden Ansprüche,
**dadurch gekennzeichnet,**
**dass** die Wasserleitung (24) an einen Sammelbehälter (34) strömungstechnisch angeschlossen ist.

6. Geschirrspülmaschine nach einem der vorhergehenden Ansprüche,
**gekennzeichnet durch**
einen Luftleitkanal (35), der an den Luftabführungskanal (23) strömungstechnisch angeschlossen ist und der anderendseitig in die den Spülbehälter (4) umgebende Atmosphäre (38) mündet.

7. Geschirrspülmaschine nach einem der vorhergehenden Ansprüche,
**gekennzeichnet durch**
eine mit dem Luftabführungskanal (23) zusammenwirkende Luftleiteinrichtung (36), die ein aus einer ersten Gebrauchsstellung in eine zweite Gebrauchsstellung und umgekehrt überführbares Luftleitmittel (37) aufweist, wobei der Luftabführungskanal (23) in der ersten Gebrauchsstellung des Luftleitmittels (37) in strömungstechnischer Wirkverbindung mit dem Spülraum (4) und in der zweiten Gebrauchsstellung des Luftleitmittels (37) in strömungstechnischer Wirkverbindung mit der den Spülraum (4) umgebenden Atmosphäre (38) steht.

8. Verfahren zum Betrieb einer Geschirrspülmaschine nach einem der vorhergehenden Ansprüche,
**dadurch gekennzeichnet,**
**dass** während einer Spülguttrocknung eine den Spülraum (4) verschließende Spülraumtür automatisch geöffnet wird und mit Öffnung der Spülraumtür Trocknungsluft aus dem Spülraum (4) durch den als Luftdurchströmungsraum dienenden Spaltraum (21) geführt wird.

9. Verfahren zum Betrieb einer Geschirrspülmaschine nach einem der vorhergehenden Ansprüche,
**dadurch gekennzeichnet,**
**dass** mit Beginn einer Spülguttrocknung Trocknungsluft in einem Umluftkreislauf durch den Spülraum (4) und den als Luftdurchströmungsraum dienenden Spaltraum (21) geführt wird.

10. Verfahren nach Anspruch 9,
**dadurch gekennzeichnet,**
**dass** während der Spülguttrocknung eine den Spülraum (4) verschließende Spülraumtür automatisch geöffnet wird und mit Öffnung der Spülraumtür die aus dem Spülgutraum (4) in den als Luftdurchströmungsraum dienenden Spaltraum (21) geführte Trocknungsluft durch den Luftführungskanal (35) in die den Spülbehälter (4) umgebende Atmosphäre (38) geführt wird.

## Claims

1. Dishwasher, in particular a domestic dishwasher, comprising a washing container (3) which provides a washing chamber (4) and is used to receive washware (5) to be washed, and comprising a heat pump device (9) which has an evaporator (13) which is arranged inside a reservoir (16) filled with water (17),
the reservoir (16) being arranged within a housing (20) which surrounds the reservoir (16) while leaving a gap (21) serving as an air flow chamber, the gap (21) being fluidically connected with a first connection to an air supply channel (22) and with a second connection to an air discharge channel (23), which channels (22, 23) each open into the washing chamber (4) at the other end,
**characterised in that**
the gap (21) is fluidically connected with a third connection to a water pipe (24) which opens into the washing chamber (4) and into which a pump (25) is integrated, so that any condensate that has accumulated in the housing (20) may be pumped out of the housing (20) and conveyed into the washing container (3).

2. Dishwasher according to claim 1,
**characterised in that**
a fan unit (26) is integrated into the air supply channel (22) and/or into the air discharge channel (23).

3. Dishwasher according to either claim 1 or claim 2,
**characterised in that**
the reservoir (16) has a bottom part (27), a top part (28) and side parts (29) connecting the bottom part (27) and the top part (28), the bottom part (27) being equipped with insulation (31) on its outer surface (30).

4. Dishwasher according to claim 3,
**characterised in that**
the insulation (31) fills the gap (21) between the reservoir (16) and the housing (20) in the region of the bottom part (27).

5. Dishwasher according to any of the preceding claims,
**characterised in that**
the water pipe (24) is fluidically connected to a collection container (34).

6. Dishwasher according to any of the preceding claims,
**characterised by**
an air conduction channel (35) which is fluidically connected to the air discharge channel (23) and which opens at the other end into the atmosphere (38) surrounding the washing container (4).

7. Dishwasher according to any of the preceding claims,
**characterised by**
an air conduction device (36) which interacts with the air discharge channel (23) and has air conduction means (37) which can be transferred from a first use position to a second use position and vice versa, the air discharge channel (23) being fluidically operatively connected to the washing chamber (4) in the first use position of the air conduction means (37) and being fluidically operatively connected to the atmosphere (38) surrounding the washing chamber (4) in the second use position of the air conduction means (37).

8. Method for operating a dishwasher according to any of the preceding claims,
**characterised in that**
during a washware-drying process, a washing chamber door that closes off the washing chamber (4) is automatically opened and when the washing chamber door is opened, drying air is guided out of the washing chamber (4) through the gap (21) that serves as an air flow chamber.

9. Method for operating a dishwasher according to any of the preceding claims,
**characterised in that**
at the start of the washware-drying process, drying air is guided in an air circulation circuit through the washing chamber (4) and through the gap (21) serving as the air flow chamber.

10. Method according to claim 9,
**characterised in that**
during the washware-drying process, a washing chamber door which closes off the washing chamber (4) is opened automatically and when the washing chamber door is opened, the drying air guided from the washware chamber (4) into the gap (21) serving as an air flow chamber is guided through the air guide channel (35) into the atmosphere (38) surrounding the washing container (4).

## Revendications

1. Lave-vaisselle, en particulier lave-vaisselle électroménager, comportant un récipient de lavage (3) fournissant un espace de lavage (4), lequel serve à recevoir des articles à laver (5), et un dispositif de pompe à chaleur (9), lequel comporte un évaporateur (13), lequel est disposé à l'intérieur d'un réservoir (16) rempli d'eau (17),
dans lequel le réservoir (16) est disposé à l'intérieur d'un boîtier (20), lequel entoure le réservoir (16) de manière à former un espace interstitiel (21) servant d'espace d'écoulement d'air, dans lequel l'espace interstitiel (21) est raccordé par technique d'écoulement à un conduit d'alimentation en air (22) à l'aide d'un premier raccordement et à un conduit d'évacuation d'air (23) à l'aide d'un deuxième raccordement, lesdits conduits (22, 23) débouchant respectivement dans l'espace de lavage (4) au niveau de l'autre extrémité,
**caractérisé en ce**
**que** l'espace interstitiel (21) est raccordé par technique d'écoulement avec un troisième raccordement à une conduite d'eau (24) débouchant dans l'espace de lavage (4) et dans laquelle une pompe (25) est intégrée de telle sorte que du condensat se produisant dans le boîtier (20) peut être pompé hors du boîtier (20) et transféré dans le récipient de lavage (3).

2. Lave-vaisselle selon la revendication 1,
**caractérisé en ce**
**qu'**une unité de ventilateur (26) est intégrée dans le conduit d'alimentation en air (22) et/ou dans le conduit d'évacuation d'air (23).

3. Lave-vaisselle selon la revendication 1 ou 2,
**caractérisé en ce**
**que** le réservoir (16) comporte une partie fond (27), une partie couvercle (28) et des parties latérales (29) reliant la partie fond (27) à la partie couvercle (28), dans lequel la partie fond (27) est équipée d'une isolation (31) sur sa surface extérieure (30).

4. Lave-vaisselle selon la revendication 3,
**caractérisé en ce**
**que** l'isolation (31) remplit l'espace interstitiel (21) entre le réservoir (16) et le boîtier (20) dans la zone de la partie fond (27).

5. Lave-vaisselle selon l'une quelconque des revendications précédentes,
**caractérisé en ce**
**que** la conduite d'eau (24) est raccordée par technique d'écoulement à un récipient de collecte (34).

6. Lave-vaisselle selon l'une quelconque des revendications précédentes,
**caractérisé par**
un conduit de guidage d'air (35), lequel est raccordé par technique d'écoulement au conduit d'évacuation d'air (23) et lequel débouche au niveau de l'autre extrémité dans l'atmosphère (38) entourant le récipient de lavage (4).

7. Lave-vaisselle selon l'une quelconque des revendications précédentes,
**caractérisé par**
un dispositif de guidage d'air (36) coopérant avec le conduit d'évacuation d'air (23) et comportant un moyen de guidage d'air (37) pouvant être transféré d'une première position d'utilisation vers une seconde position d'utilisation et inversement, dans lequel le conduit d'évacuation d'air (23) est en liaison fonctionnelle par technique d'écoulement avec l'espace de lavage (4) dans la première position d'utilisation du moyen de guidage d'air (37) et est en liaison fonctionnelle par technique d'écoulement avec l'atmosphère (38) entourant l'espace de lavage (4) dans la seconde position d'utilisation du moyen de guidage d'air (37).

8. Procédé permettant de faire fonctionner un lave-vaisselle selon l'une quelconque des revendications précédentes,
**caractérisé en ce**
**que**, pendant un séchage d'articles à laver, une porte d'espace de lavage fermant l'espace de lavage (4) est automatiquement ouverte et, lorsque la porte d'espace de lavage est ouverte, de l'air de séchage est guidé hors de l'espace de lavage (4) à travers l'espace interstitiel (21) servant d'espace d'écoulement d'air.

9. Procédé permettant de faire fonctionner un lave-vaisselle selon l'une quelconque des revendications précédentes,
**caractérisé en ce**
**qu'**au début d'un séchage d'articles à laver, de l'air de séchage est guidé dans un circuit de circulation d'air à travers l'espace de lavage (4) et l'espace interstitiel (21) servant d'espace d'écoulement d'air.

10. Procédé selon la revendication 9,
**caractérisé en ce**
**que**, pendant le séchage d'articles à laver, la porte d'espace de lavage fermant l'espace de lavage (4) est automatiquement ouverte et, lorsque la porte d'espace de lavage est ouverte, l'air de séchage guidé depuis l'espace d'articles à laver (4) dans l'espace interstitiel (21) servant d'espace d'écoulement d'air est guidé à travers le conduit de guidage d'air (35) dans l'atmosphère (38) entourant le récipient de lavage (4).
